Europäisches Patentamt

European Patent Office

Office européen des brevets

(19)

(11) Numéro de publication : **0 056 204**
**B1**

(12) ## FASCICULE DE BREVET EUROPÉEN

(45) Date de publication du fascicule du brevet :
30.10.85

(51) Int. Cl.⁴ : **B 23 Q  7/04**

(21) Numéro de dépôt : **81401909.7**

(22) Date de dépôt : **02.12.81**

(54) **Perfectionnement aux tours à poupée centrale.**

(30) Priorité : **11.12.80 FR 8026336**

(43) Date de publication de la demande :
**21.07.82 Bulletin 82/29**

(45) Mention de la délivrance du brevet :
**30.10.85 Bulletin 85/44**

(84) Etats contractants désignés :
**AT BE CH DE GB IT LI LU NL SE**

(56) Documents cités :
**CH-A-   586 094**
**FR-A- 1 227 266**
**FR-A- 1 314 746**
**FR-A- 2 125 385**
**FR-A- 2 220 345**
**FR-A- 2 448 954**
**GB-A- 1 062 515**
**US-A- 1 503 111**
**US-A- 1 587 261**
**US-A- 3 129 506**
**US-A- 3 575 302**
**US-A- 3 741 048**
**US-A- 3 827 581**
**US-A- 4 026 171**
**METALWORKING PRODUCTION, vol. 106, 30 mai
1962 "Standard mechanical hand links standard
machines", pages 22, 44, 45**

(73) Titulaire : **SOCIETE NOUVELLE RAMO S.A. :
21, rue Henri Gélin
F-79006 Niort Cedex (FR)**

(72) Inventeur : **Champeau, Marcel A.
41, rue de la Recouvrance
F-79000 Niort (FR)**
Inventeur : **Tabutin, André H.
5, Avenue du Saut de Loup Résidence de Beauregard
F-78170 La Celle-St-Cloud (FR)**

(74) Mandataire : **Moulines, Pierre et al
Cabinet BEAU de LOMENIE 55, rue d'Amsterdam
F-75008 Paris (FR)**

Jouve, 18, rue St-Denis, 75001 Paris, France

## Description

La présente invention a pour objet un tour à poupée centrale.

Pour procéder à l'usinage, notamment au tournage simultané des deux extrémités d'une pièce, celle-ci est maintenue serrée dans une broche tournante, montée dans une poupée fixe disposée au milieu du banc d'un tour.

Ce procédé est utilisable lorsqu'il s'agit de pièces relativement longues qui peuvent s'étendre sur toute la longueur de la broche traversant la poupée.

Toutefois pour ces pièces courtes, il est impossible d'utiliser le dispositif mentionné ci-dessus pour procéder à l'usinage intérieur et/ou extérieur de la pièce et il est alors nécessaire d'avoir recours à une poupée fixe sur laquelle sont montés rotatifs sur une même broche deux mandrins de serrage des pièces disposés symétriquement sur deux faces opposées de la poupée.

Cette disposition permet d'usiner en une seule opération les parties intérieures et/ou extérieures de deux pièces montées sur les deux mandrins. Cependant pour effectuer deux usinages successifs sur une même pièce, il faut procéder à un grand nombre de manipulations pour transférer la pièce de l'un des mandrins à l'autre et pour charger ou décharger celle-ci.

Le brevet GB-A 1 062 515 décrit un tour à poupée centrale, comportant un banc portant une poupée fixe sur laquelle sont montés rotatifs sur une même broche deux mandrins de serrage des pièces, disposés symétriquement sur deux faces opposées de la poupée, avec un moyen de transfert des pièces de l'un des mandrins à l'autre mandrin disposé sur la face opposée de la poupée. Ce document a servi de base pour l'élaboration du préambule de la revendication 1.

Toutefois ce brevet ne permet pas d'effectuer un usinage interne et/ou externe d'une pièce et il ne comporte pas de moyens pour le montage automatique de la pièce dans le mandrin.

Par ailleurs, le brevet français 1 227 266 concerne une machine pour l'usinage de goujons dans laquelle les pièces à usiner sont montées dans deux mandrins solidaires de deux broches parallèles.

Les moyens de transfert utilisés dans cette machine ne peuvent donc être utilisés sur un tour à poupée centrale ou les mandrins sont montés sur une même broche des deux côtés opposés.

La présente invention a principalement pour objet de permettre l'usinage de pièces défini ci-dessus et que les dispositifs décrits dans les documents cités ci-dessus ne permettent pas de réaliser.

Conformément à la présente invention, le moyen de transfert est utilisé en combinaison avec deux moyens d'injection et d'éjection des pièces disposés coaxialement à la broche et respectivement en regard des deux mandrins, de la poupée, ledit moyen de transfert étant constitué d'un bras dont l'une des extrémités montée fixe est entraînée en rotation par un vérin, ledit bras portant à son autre extrémité un axe vertical pivotant entraîné en rotation par un vérin et portant à son extrémité inférieure une pince de préhension de pièce à usiner.

Le dispositif suivant l'invention permet de procéder à plusieurs opérations d'usinage sur une même pièce relativement courte et à son transfert d'un mandrin à l'autre en un temps extrêmement réduit.

Les avantages de l'invention seront mieux compris à la lecture de la description qui va suivre d'un exemple de réalisation et en se référant aux dessins annexés, dans lesquels :

La figure 1 est une vue en élévation d'un tour à poupée centrale perfectionné suivant l'invention.

Les figures 2a à 2n sont des vues en plan du tour à poupée centrale au cours des différentes opérations d'alimentation.

La figure 3 est une vue en élévation suivant la flèche III de la figure 1 de la pince du moyen de transfert.

La figure 4 est une vue en coupe transversale du moyen d'actionnement des mors de la pince.

La figure 5 est une vue en élévation et en coupe axiale de l'extrémité de l'un des moyens d'injection avec les doigts en position rétractée.

La figure 6 est une même vue en coupe de l'extrémité du moyen d'injection avec les doigts en expansion maintenant la pièce à usiner.

La figure 7 est une demi-vue en coupe axiale du moyen de contrôle de la pièce en position serrée.

La figure 8 est une demi-vue en coupe axiale du moyen de contrôle de la pièce en position desserrée.

La figure 9 est une vue en coupe suivant la ligne IX IX de la figure 7.

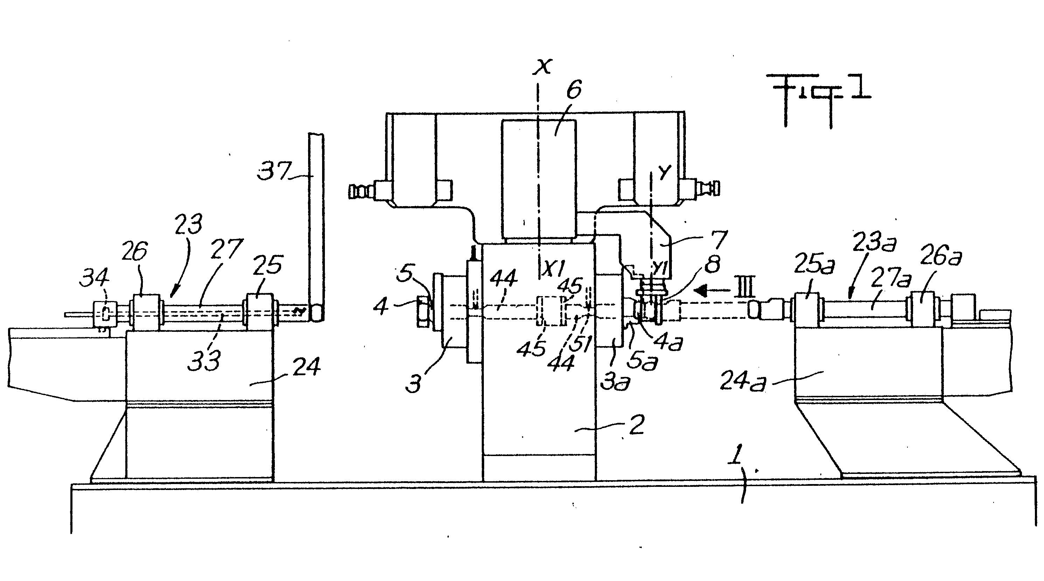

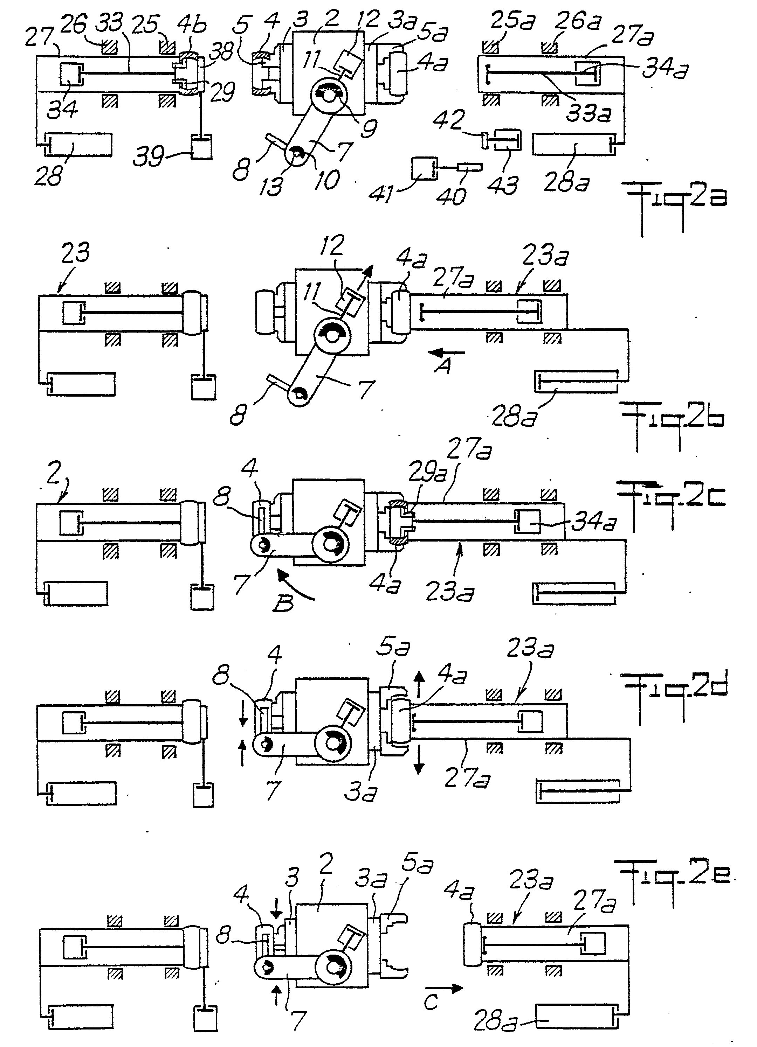

Aux figures 1 et 2a on a représenté un tour à poupée centrale qui est constitué d'un bâti 1 sur lequel est montée dans sa partie centrale une poupée fixe 2 sur laquelle sont montés rotatifs sur une même broche deux mandrins 3, 3a de serrage des pièces disposées symétriquement sur deux faces opposées de la poupée. Suivant le mode de réalisation représenté, l'un des mandrins 3 assure le maintien d'une pièce annulaire à usiner 4 par ses mors intérieurs 5 et l'autre mandrin 3a assure le maintien d'une pièce identique à usiner 4a par ses mors extérieurs 5a.

Sur la face supérieure de la poupée fixe 2 est monté pivotant suivant un axe vertical $XX_1$ un moyen de transfert qui comprend une partie cylindrique 6 solidaire d'un bras de transfert 7 dans lequel est montée pivotante suivant un axe vertical $YY_1$ une pince 8 de préhension des pièces 4, 4a. La rotation du bras 7 de transfert est obtenue au moyen d'un vérin hydraulique rotatif 9 et la rotation de la pince 8 est obtenue au moyen d'un vérin hydraulique rotatif 10 (Fig. 2a). Le pivotante sur la partie supérieure de la poupée verrouillage du bras 7 est obtenu au moyen d'un organe de verrouillage 11 actionné par un vérin 12.

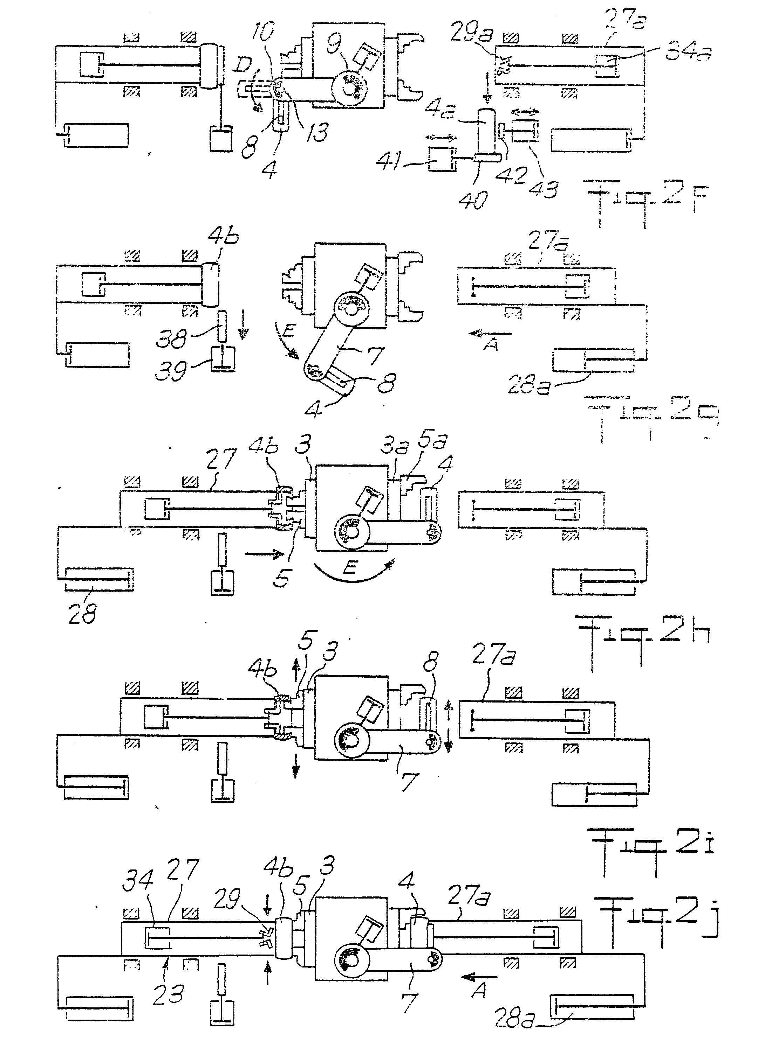

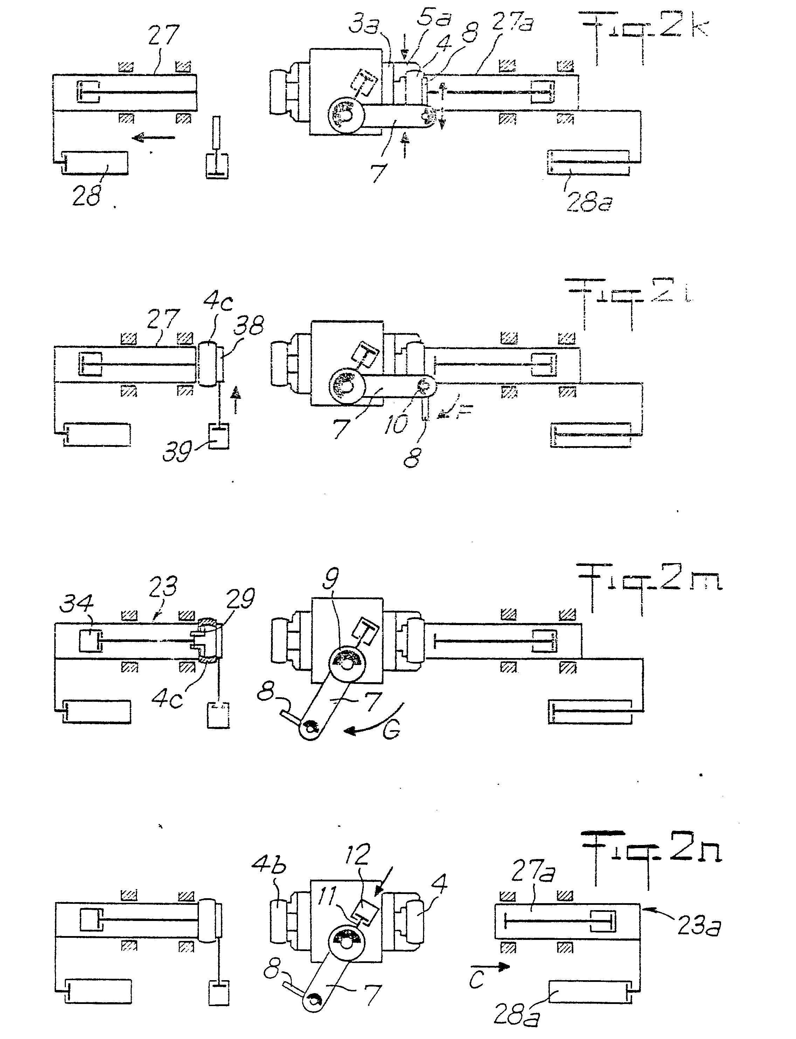

A l'extrémité inférieure de l'axe 13 portant la pince 8 est disposé un organe de support 14 (Fig. 3 et 4) sur lequel sont montés pivotants des axes 15, 15a solidaires des mors 16, 16a de la pince et de roues dentées, 17, 17a montées rotatives dans l'organe de support 14. Les roues dentées, 17, 17a engrènent avec une crémaillère, 18 solidaire d'une tige 19 à l'extrémité de laquelle est fixé un piston 20 d'un vérin monté coulissant dans un cylindre 21 et soumis à l'action d'organes élastiques 22 ou rondelles élastiques en appui contre le piston et contre l'un des fonds du cylindre 21, lesdits mors de la pince étant maintenus en position de serrage par les organes élastiques 22 et en position d'ouverture sous l'action du fluide agissant sur le piston 20 du côté opposé aux organes élastiques et qui en déplaçant la crémaillère 18 entraînent les roues dentées 17, 17a et actionnent les mors 16, 16a.

De part et d'autre de la poupée fixe 2 sont disposés suivant un axe horizontal et coaxialement à la broche de la poupée de part et d'autre de cette dernière deux moyens d'injection 23 et d'éjection 23a des pièces, lesdits moyens comportant chacun un organe de support 24, 24a reposant sur le bâti 1 du tour et présentant deux paliers 25, 26 et 25a, 26a (Fig. 1, 2) dans lesquels est monté coulissant un élément tubulaire 27, 27a actionné par un vérin 28, 28a.

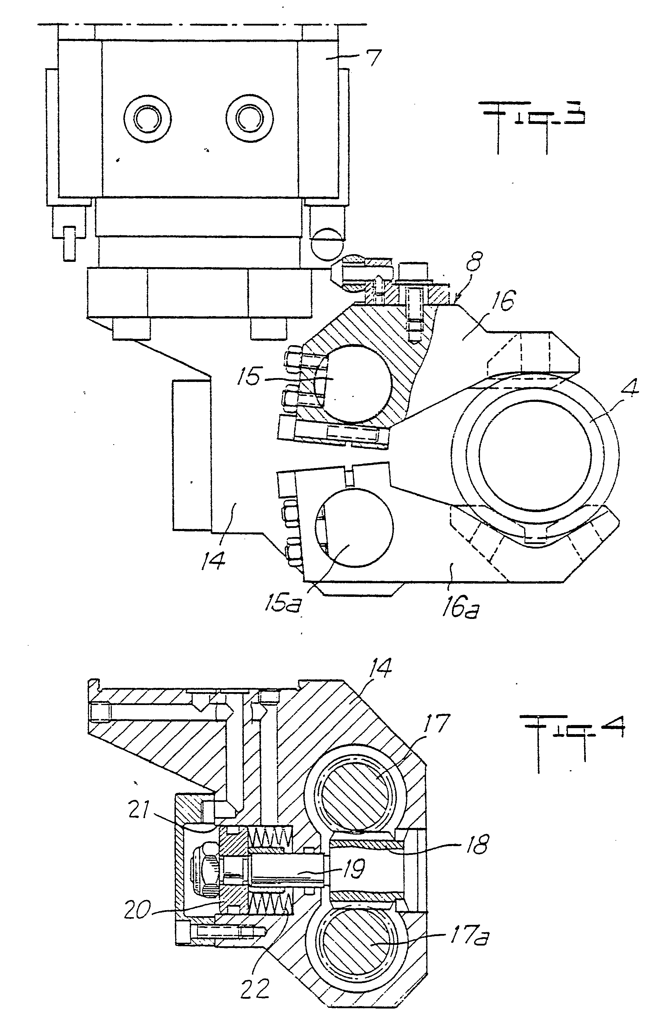

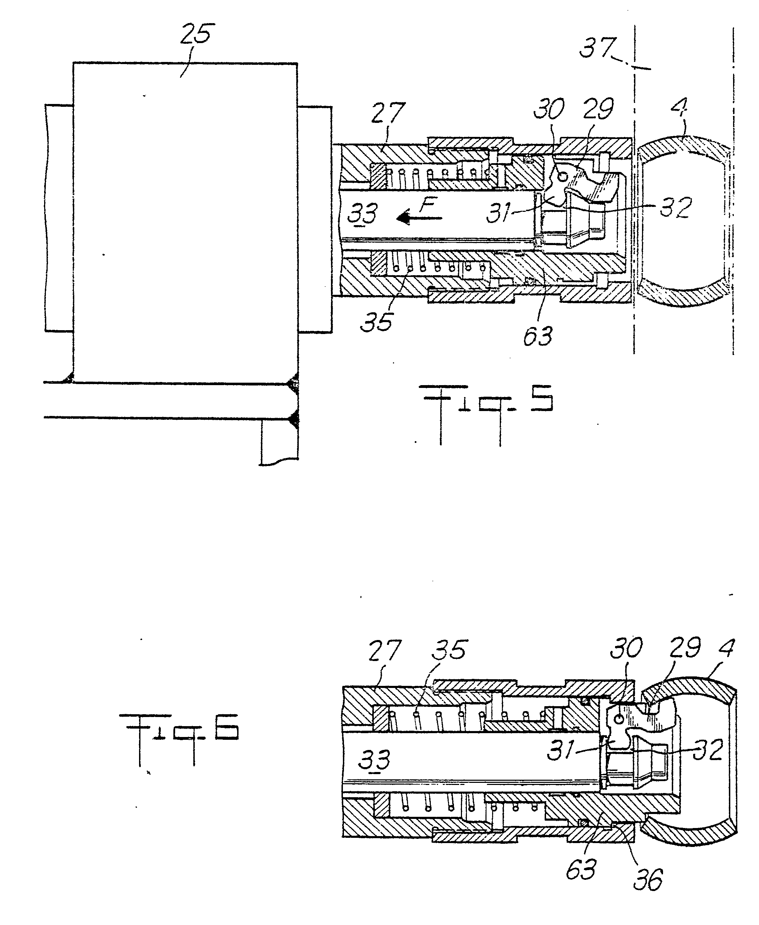

A l'une de ses extrémités dirigée en regard des mandrins 3, 3a l'élément tubulaire 27, 27a comporte intérieurement un manchon 63 (Fig. 5, 6) monté coulissant dans ledit élément et muni intérieurement de trois doigts 29 montés pivotants autour d'axes 30 solidaires du manchon 63. Du côté opposé à l'axe 30 les doigts 29 sont prolongés par un bossage 31 qui est engagé dans une gorge 32 ménagée à l'extrémité d'une tige 33, 33a montée coulissante dans l'élément tubulaire 27, 27a et qui est commandée à son autre extrémité par un vérin 34, 34a.

Le manchon 63 est soumis à l'action d'un ressort 35 qui a tendance à maintenir le manchon 63 en butée contre un épaulement 36 de l'élément tubulaire 27 lorsque les doigts 29 sont en position d'ouverture.

Le déplacement de la tige 33 (Fig. 5) dans le sens de la flèche F provoque l'entraînement dans le même sens du manchon 63 qui est solidaire des doigts 29 qui sont eux-mêmes reliés à la tige 33, de telle sorte que les doigts 29 sont escamotés à l'intérieur de l'élément tubulaire 27 alors que le manchon 63 comprime le ressort 35.

Lorsque la tige 33 est déplacée en sens inverse de la flèche F le manchon 63 vient en butée contre l'épaulement 36 et s'engage à l'intérieur de la pièce 4 (Fig. 6), les doigts étant encore en position escamotée. La poursuite du déplacement de la tige 33 dans le sens inverse de la flèche F provoque le pivotement des doigts 29 autour des axes 30 et l'engagement desdits doigts dans la pièce 4 contre sa paroi intérieure.

En regard du moyen d'injection 23 est disposée une goulotte 37 d'alimentation en pièces qui sont amenées directement en regard des doigts 29 de l'élément tubulaire 27 (Fig. 1), la pièce 4 à charger étant maintenue du côté opposé aux doigts 29 par un organe de butée 38 solidaire de la tige de piston d'un vérin 39 actionnant ledit organe de butée.

Une butée semblable 40 actionnée par un vérin 41 est disposée entre le moyen d'éjection 23a et une goulotte d'évacuation des pièces non représentées au dessin, ladite butée coopérant avec un organe chasse copeaux 42 actionné par un vérin 43.

Le dispositif suivant l'invention fonctionne de la manière suivante :

A la figure 2a le dispositif est représenté au moment où les pièces 4 et 4a montées sur les mandrins 3, 3a en position de serrage sont en fin de cycle d'usinage, alors que le bras de chargement 7 est maintenu en position de repos par l'organe de verrouillage 11 et qu'une pièce 4b est maintenue par les doigts 29 sur le moyen d'injection 23 en appui contre l'organe de butée 38. Le moyen d'éjection 23a est en position escamotée alors que la pince 8 du bras de transfert est en position d'ouverture. Dans la position représentée à la figure 2b, le bras 7 de transfert est libéré par actionnement du vérin 12 qui assure l'effacement de l'organe de verrouillage 11 et l'élément tubulaire 27 du moyen d'éjection est actionné suivant la flèche A par le vérin 28a afin d'engager la tête de l'élément tubulaire dans la pièce 4a.

A la figure 2c les doigts 29a du moyen d'éjection 23a sont déployés sous l'action du vérin 34a, et viennent en position de serrage à l'intérieur de la pièce 4a. Par ailleurs, le vérin 9 est actionné de telle sorte que le bras de transfert 7 pivote suivant la flèche B et vient s'engager sur la pièce 4 avec la pince 8 en position d'ouverture.

A la figure 2d la pince 8 est en position de serrage, les mors 16, 16a étant soumis à l'action des organes élastiques 22 et de la pression hydraulique qui assurent le serrage des mors 16, 16a sur la pièce 4 (Fig. 3 et Fig. 4). Simultanément les mors 5a du mandrin 3a sont desserrés, libérant la pièce 4a qui est montée sur l'extrémité de l'élément tubulaire 27a, du moyen d'éjection 23a.

A la figure 2e, les mors 5 du mandrin 3 sont desserrés de manière à libérer la pièce 4 qui est maintenue par la pince 8 du bras de transfert 7. Simultanément le vérin 28a du moyen d'éjection 23a est actionné de manière à provoquer le déplacement de l'élément tubulaire 27a, dans le sens de la flèche C pour l'évacuation de la pièce 4a montée à l'extrémité dudit élément.

A la figure 2f, le vérin 10 du bras 7 est actionné provoquant le pivotement autour de l'axe 13 de la pince 8 portant la pièce 4 dans une position intermédiaire représentée en trait interrompu, puis dans une position définitive de retournement à droite suivant la flèche D.

Simultanément le vérin 34a est actionné pour l'escamotage des doigts 29a et l'échappement de la pièce 4a qui vient en appui contre l'organe de butée 40, avec avance et recul de l'organe chasse-copeaux 42. Ensuite l'organe de butée 40 revient en position d'effacement libérant ainsi la pièce 4a qui est évacuée dans une goulotte non représentée au dessin.

Au cours des opérations représentées à la figure 2g, l'organe de butée 38 actionné par le vérin 39 vient occuper une position d'effacement libérant le passage de la pièce 4b et le vérin 28a est actionné amenant l'élément tubulaire 27a dans une position intermédiaire. Simultanément le vérin 9 actionne le bras 7 qui pivote suivant la flèche E et se trouve alors en position intermédiaire et en direction du mandrin 3a.

A la figure 2h le bras 7 poursuit sa course suivant la flèche E et amène la pièce 4 entre les mors 5a desserrés du mandrin 3a, alors que le vérin 28 provoque le déplacement vers la droite de l'élément tubulaire 27, portant à son extrémité la pièce à usiner 4b qui vient s'engager sur les mors 5 du mandrin 3.

A la figure 2i la pression de la pince 8 est relâchée et le serrage sur la pièce 4 est assuré uniquement par la pression des organes élastiques 22. Simultanément les mors 5a du mandrin 3 sont serrés afin d'assurer le maintien de la pièce 4b sur le mandrin.

Comme représenté à la figure 2j l'élément tubulaire 27a est déplacé suivant la flèche A au moyen du vérin 28a afin d'engager l'extrémité dudit élément à l'intérieur de la pièce 4. Par ailleurs les doigts 29 de l'élément tubulaire 27 du moyen d'injection 23 sont ramenés en position escamotée au moyen du vérin 34 libérant la pièce 4b montée sur le mandrin 3.

A la figure 2k, la pince 8 du bras de transfert 7 est ouverte, et la pièce 4 est maintenue sur le mandrin 3a par les mors 5a qui sont en position de serrage. Simultanément le vérin 28 est actionné afin de ramener l'élément tubulaire 27 dans sa position initiale à gauche. A la figure 2l une pièce 4c vient en regard de l'extrémité de l'élément tubulaire 27 et l'organe de butée 38 actionné par le vérin 39 vient en appui contre la pièce 4c. Par ailleurs le vérin 10 du bras 7 est actionné de manière à provoquer le pivotement de la pince 8 suivant la flèche F et à ramener celle-ci dans sa position initiale de prise de pièces à gauche.

A la figure 2m, le vérin 9 est actionné assurant ainsi l'entraînement du bras 7 de transfert suivant la flèche G afin de ramener celui-ci dans la position initiale qu'il occupait à la figure 2a. Simultanément le vérin 34 du moyen d'injection 23 est actionné assurant l'extension des doigts 29 qui viennent en position de serrage à l'intérieur de la pièce à usiner 4c.

Enfin à la figure 2n l'organe de verrouillage 11 est actionné par le vérin 12 afin de maintenir le bras de transfert 7 en position verrouillée et le vérin 28a est actionné pour déplacer suivant la flèche C l'élément tubulaire 27a du moyen d'éjection qui revient à sa position initiale.

Lorsque le dispositif se trouve dans la position de la figure 2n, les pièces 4 et 4b sont serrées dans les mandrins 3, 3a et peuvent être usinées.

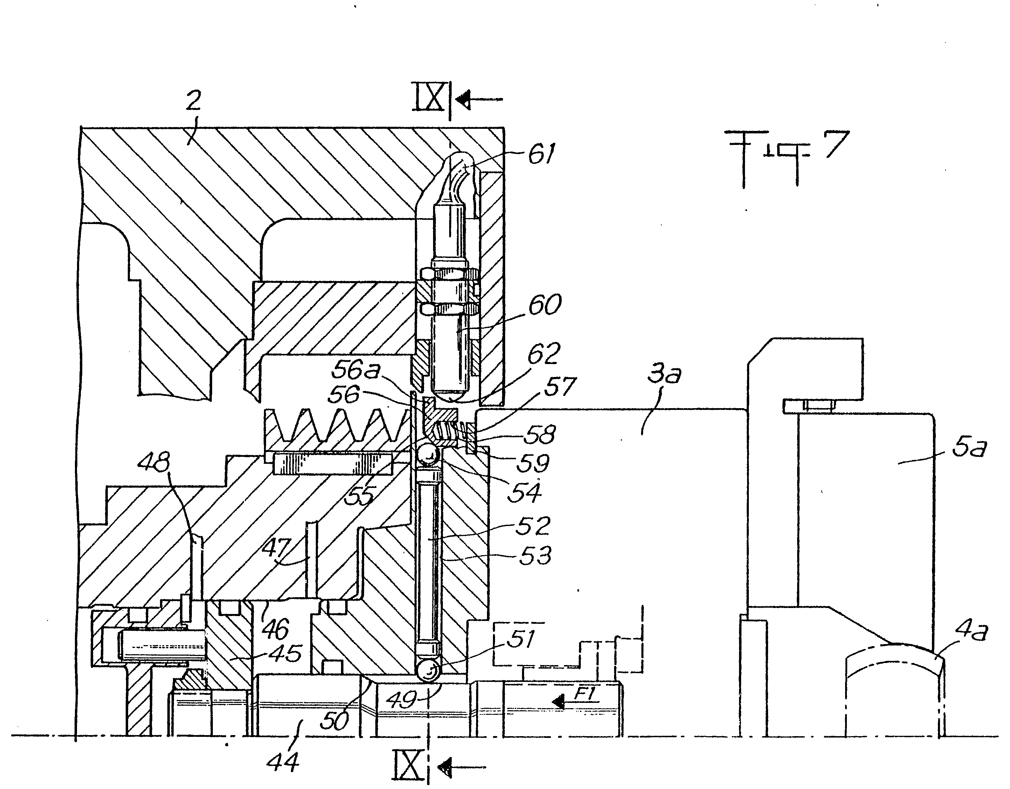

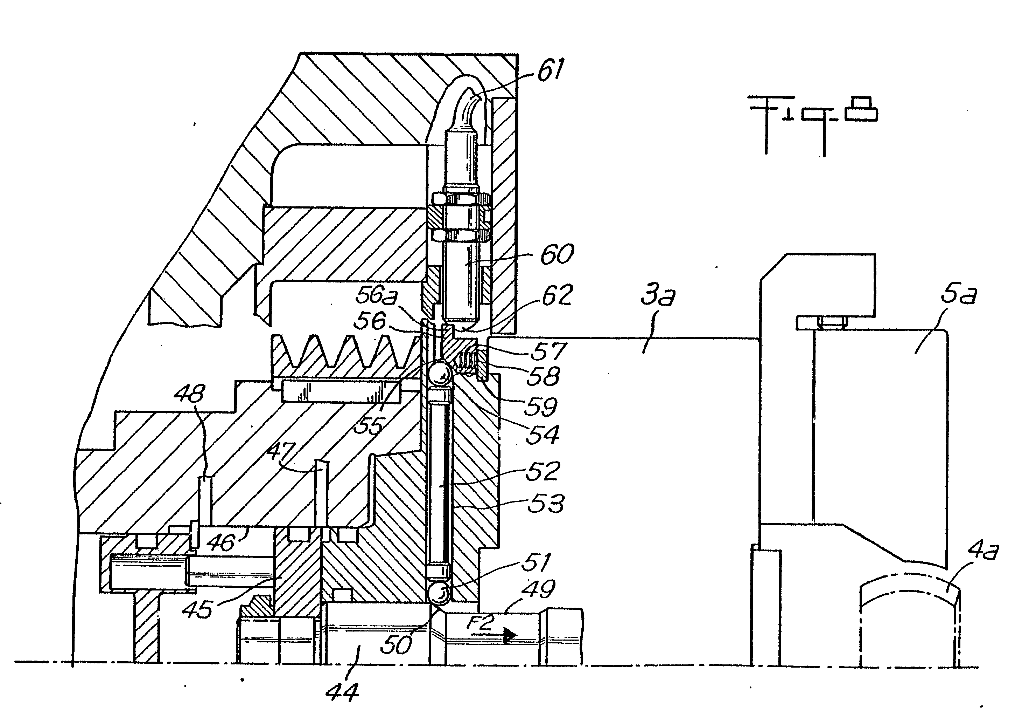

Afin de déterminer la position de serrage et de desserrage des mors 5 et 5a des mandrins 3, 3a pour procéder au montage et au démontage des pièces, il est prévu sur chaque mandrin 3, 3a un moyen de détection qui est représenté aux figures 7, 8 et 9. Le moyen de commande des mâchoires 5, 5a du mandrin 3, 3a n'est représenté que partiellement par une tige 44 qui est reliée à un piston 45 d'un vérin comportant un cylindre 46 dans lequel débouchent sur les deux faces du piston deux conduits de fluide hydraulique 47 et 48. Les organes de liaison entre la tige 44 et les mors 5a ne sont pas représentés au dessin car ils sont d'un type bien connu.

Sur la tige 44 il est prévu une partie cylindrique 49 de section réduite et présentant d'un côté une face tronconique 50 ou face inclinée, ladite partie 49 étant en contact avec trois billes 51 qui sont en appui contre l'une des extrémités de trois tiges, ou poussoirs, 52 montées coulissantes dans trois alésages 53 prévus dans la partie rotative du mandrin 3, 3a. A leur autre extrémité, les tiges ou poussoirs 52 sont en appui par l'intermédiaire de billes 54 contre une face inclinée 55 à 45° d'une bague 56 qui présente du côté opposé à la face inclinée des logements 57 dans lesquels sont engagés des ressorts 58 en appui contre une rondelle 59 solidaire du mandrin 3, 3a.

Sur la bague 56 il est prévu une collerette 56a qui se déplace en regard d'un détecteur 60 de champ magnétique relié par un conducteur 61 à une mémoire séquentielle de programmation.

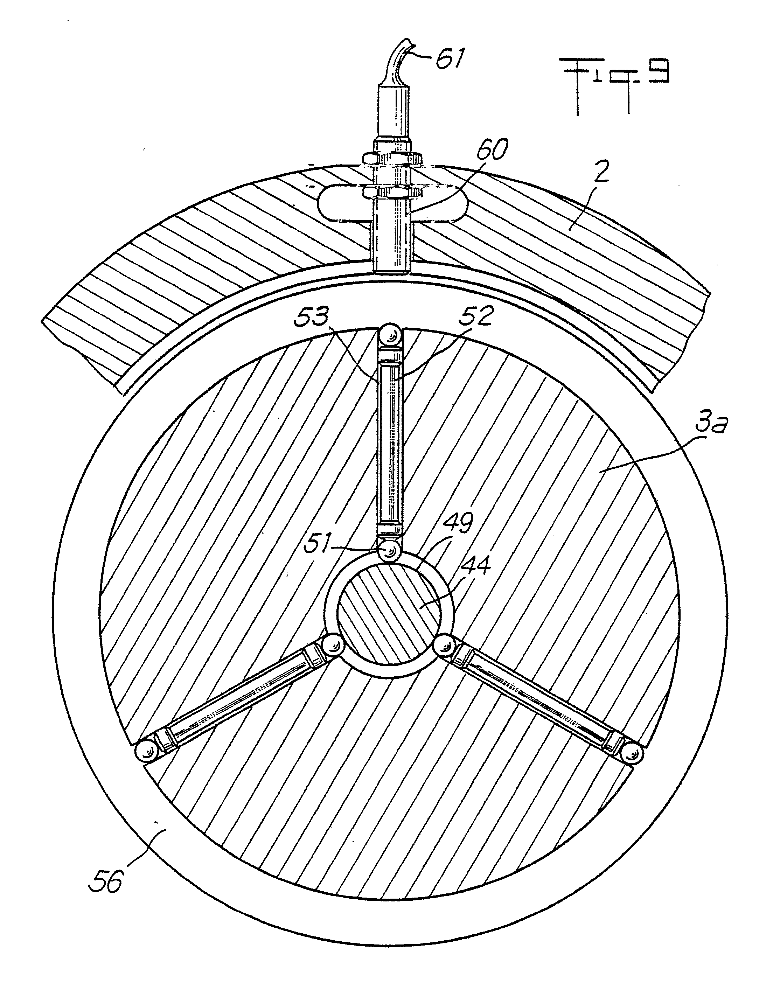

Lorsque le fluide hydraulique (Fig. 7, 9) est introduit dans le cylindre 46 par le conduit 47 le piston 45 et la tige 44 sont entraînés dans le sens de la flèche F1 assurant ainsi le serrage des mors 5a sur la pièce 4a. Dans cette position les billes 51 sont maintenues élastiquement en contact avec la partie cylindrique 49 de la tige 44 sous l'action de la bague 56 repoussée par les ressorts 58 qui transmet sa poussée par les billes 54 aux poussoirs 52 et aux billes 51. Dans cette position la collerette 56a de la bague 56 se trouve en dehors du champ magnétique 62 du détecteur 60 qui n'est pas excité et n'envoie aucune information à la mémoire séquentielle de programmation. Pour procéder au desserrage de la pièce 4a, on inverse l'arrivée du fluide hydraulique qui s'effectue par le conduit 48, de telle sorte que le piston 45 et la tige 44 sont repoussés dans le sens de la flèche F2. La tige 44 agit sur le dispositif de commande des mors 5, 5a qui s'ouvrent pour desserrer la pièce. Dans cette position les billes 51 viennent en contact avec la face inclinée 50 de la tige 44 et repoussent les tiges ou poussoirs 52 ainsi que les billes 54 en direction de la bague, lesdites billes 54 en contact avec la face inclinée 55 de la bague exerçant une poussée radiale qui est transformée en poussée axiale sur la bague 56. Il en résulte un déplacement axial de la bague 56 et la pénétration de la collerette 56a dans le champ magnétique 62 du détecteur 60. Ce dernier envoie une information à la mémoire séquentielle de programmation selon laquelle la pièce est effectivement en position desserrée. Les opérations de déchargement de la pièce usinée et de chargement d'une pièce brute peuvent commencer à cet instant précis.

## Revendications

1. Tour à poupée centrale pour l'usinage interne et/ou externe d'une pièce, comprenant un banc portant une poupée fixe (2) sur laquelle sont montés rotatifs sur une même broche deux mandrins (3, 3a) de serrage des pièces disposés symétriquement sur deux faces opposées de la poupée (2) et un moyen de transfert (7, 8) monté sur la poupée fixe (2) pour le transfert des pièces de l'un à l'autre des mandrins (3, 3a) caractérisé en ce que le moyen de transfert (7, 8) est utilisé en combinaison avec deux moyens d'injection (23) et d'éjection (23a) des pièces (4, 4a) disposés coaxialement à la broche et respectivement en regard des deux mandrins (3, 3a) de la poupée (2), ledit moyen de transfert étant constitué d'un bras (7) dont l'une des extrémités montée pivotante sur la partie supérieure de la poupée (2) fixe est entraînée en rotation par un vérin (9), ledit bras (7) portant à son autre extrémité un axe vertical (13) pivotant entraîné en rotation par un vérin (10) et portant à son extrémité inférieure une pince (8) de préhension de pièce à usiner.

2. Tour à poupée centrale suivant la revendication 1, caractérisée en ce que la pince (8) est constituée de deux mors (16, 16a) entre lesquels est maintenue la pièce (4), lesdits mors (16, 16a) étant solidaires d'un axe (15, 15a) monté rotatif sur l'extrémité de l'axe vertical du bras (7) chacun des axes rotatifs (15, 15a) portant une roue dentée (17, 17a) qui engrène avec une crémaillère (18) actionnée par un vérin (20, 21) contre l'action d'organes élastiques (22) maintenant la pince (8) en position de fermeture ou de préhension de la' pièce.

3. Tour à poupée centrale suivant la revendication 1, caractérisée en ce que la partie rotative du bras de transfert (7) est maintenue dans au moins une position déterminée d'usinage des pièces par un organe de verrouillage (11).

4. Tour à poupée centrale suivant la revendication 1, caractérisée en ce que les moyens d'injection (23) et d'éjection (23a) des pièces sont constitués chacun par un organe de support (24, 24a) dans lequel est monté coulissant dans des paliers (25, 26, et 25a, 26a) un élément tubulaire (27, 27a) actionné par un vérin (28, 28a), ledit élément tubulaire (27, 27a) étant muni à l'une de ses extrémités d'au moins trois doigts (29) articulés susceptibles de venir en prise avec l'alésage intérieur de la pièce (4), lesdits doigts (29) étant actionnés par une tige (33, 33a), commandée par un vérin (34, 34a), disposé dans l'élément tubulaire (27, 27a).

5. Tour à poupée centrale suivant la revendication 4, caractérisée en ce qu'en regard de l'élément tubulaire (27) coulissant du moyen d'injection (23) sont disposés l'orifice de sortie d'une goulotte (37) d'alimentation de pièces et un écran escamotable (38) contre lequel est susceptible de venir en butée de la pièce (4) montée sur les doigts de préhension (29).

6. Tour à poupée centrale suivant la revendication 4, caractérisée en ce que latéralement au moyen d'éjection (23a) de pièce sont disposés un organe de butée (40) de la pièce et un orifice d'une goulotte d'évacuation des pièces.

7. Tour à poupée centrale suivant la revendication 1, caractérisée en ce que chaque tige (44) de commande des mors (5, 5a) de chaque mandrin (3, 3a) présente une gorge (49) munie d'une face inclinée (50) et dans laquelle est engagée au moins une bille (51) en appui contre l'une des extrémités d'au moins un poussoir (52) dont l'autre extrémité est en appui contre une bille (54) coopérant avec une face inclinée (55) d'une bague (56) soumise à l'action d'organes élastiques (59) agissant à l'encontre de l'action de la bille, ladite bague (56) comportant une collerette (56a) constituant un écran magnétique se déplaçant en regard d'au moins un organe de détection (60) de champ magnétique relié à une mémoire séquentielle de programmation.

## Claims

1. Lathe with central headstock for internally and/or externally machining a workpiece comprising a bench carrying a fixed headstock (2) on which are mounted for rotating on the same spindle two clamp chucks (3, 3a) for clamping the workpieces placed symetrically on two opposite faces of the headstock (2), and transfer means (7, 8) mounted on the fixed headstock (2) for transfering the workpieces from one chuck to the other (3, 3a), characterized in that the transfer means (7, 8) is used in combination with two means for injecting (23) and ejecting (23a) the workpieces (4, 4a) placed coawially to the spindle and respectively opposite the two chucks (3, 3a) of the headstock (2), said transfer means being constituted by an arm (7) of which one of the ends mounted for pivoting on the upper part of the fixed headstock (2) is driven in rotation by a jack (9), said arm (7) carrying at its other end a pivoting vertical axis (13) driven in rotation by a jack (10) and carrying at its lower part a clamp means (8) for gripping the workpiece to be machined.

2. Lathe with central headstock according to claim 1, characterized in that said clamp (8) is constituted by two jaws (16, 16a) between which the workpiece (4) is held, said jaws (16, 16a) being integral with an axis (15, 15a) mounted for rotating on the end of the vertical axis of the arm (7), each of the rotating axis (15, 15a) carrying a toothed wheel (17, 17a) meshing with a rack (18) actuated by a jack (20, 21) against the action of elastic members (22) holding the clamp (8) in closed position or in position gripping the workpiece.

3. Lathe with central headstock according to claim 1, characterized in that the rotary part of the transfer arm (7) is held in at least a determined position for machining the workpieces by a locking member (11).

4. Lathe with central headstock according to claim 1, characterized in that the injection (23) and ejection (23a) means are each constituted by a supporting member (24, 24a) in which is mounted for sliding in bearings (25, 26 and 25a, 26a) a tubular element (27, 27a) actuated by a jack (28, 28a), said tubular element (27, 27a) being provided at one of its ends with at least three articulated fingers (29) capable of engaging with the internal bore of the workpiece (4), said fingers (29) being actuated by a rod (33, 33a) controlled by a jack (34, 34a) placed in the tubular element (27, 27a).

5. Lathe with central headstock according to claim 4, characterized in that opposite the sliding tubular element (27) of the injection means (23) are placed the output orifice of a workpiece feeding channel (37) and a retractable screen (38) against which the workpiece mounted on the gripping fingers can abut.

6. Lathe with central headstock according to claim 4, characterized in that laterally to the means for ejecting the workpiece (23a) are placed a workpiece stop member (40) and an orifice of the workpiece discharging channel.

7. Lathe with central headstock according to claim 1, characterized in that each rod (44) controlling the jaws (5, 5a) of each chuck (3, 3a) has a groove (49) provided with an inclined face (50) and in which is engaged at least one ball (51) resting against one of the ends of at least one push member (52) whose other end rests against a ball (54) cooperating with an inclined face (55) of a ring (56) subjected to the action of elastic members (59) acting against the action of the ball, said ring (56) comprising a flange (56a) constituting a magnetic screen moving opposite at least one detection means (60) of magnetic field connected to a sequential programming memory.

**Patentansprüche**

1. Zentraler Spindelstock für die spanende Bearbeitung eines Werkstücks von innen und/oder von außen mit einem auf einer Bank angeordneten Spindelstock (2), auf dem an ein und derselben Spindel zwei Spannfutter (3, 3a) für symmetrisch an den beiden entgegengesetzten Enden des Spindelstocks (2) angeordnete Werkstücke drehbar befestigt sind und auf dem ein Transportglied (7, 8) für den Transport von Werkstücken von einem Spannfutter (3, 3a) zum anderen angebracht ist, dadurch gekennzeichnet, daß das Transportglied (7, 8) in Kombination mit zwei koaxial zur Spindel und jeweils gegenüber einem der beiden Spannfutter (3, 3a) des Spindelstocks (2) angeordneten Zuführ- bzw. Auswurfvorrichtungen (23 bzw. 23a) für die Werkstücke (4, 4a) verwendet wird, wobei das Transportglied einen Arm (7) aufweist, dessen schwenkbar auf dem oberen Teil des Spindelstocks (2) angelenktes Ende mittels eines Stellantriebs (9) gedreht wird und dessen anderes Ende eine drehbare vertikale Achse (13) trägt, die von einem Stellantrieb (10) gedreht wird und die an ihrem unteren Ende eine Halteklammer (8) für die Werkstücke trägt.

2. Zentraler Spindelstock nach Anspruch 1, dadurch gekennzeichnet, daß die Klammer (8) zwei Backen (16, 16a), zwischen denen das Werkstück (4) gehalten wird, aufweist, wobei jede Backe (16, 16a) jeweils an einer drehbar an einem Ende der vertikalen Achse des Arms (17) angelenkten Achse (15, 15a) befestigt ist und jede der drehbaren Achsen (15, 15a) ein Zahnrad (17, 17a) aufweist, das in eine Zahnstange (18) eingreift, die durch einen Stellantrieb (20, 21) gegen die Wirkung elastischer Glieder (22), die die Klammer (8) in Schließ- oder Haltestellung des Werkstücks halten, betätig wird.

3. Zentraler Spindelstock nach Anspruch 1, dadurch gekennzeichnet, daß der drehbare Teil des Transportarms (7) durch ein Verriegelungsglied (11) in mindestens einer vorbestimmten Stellung zur spanenden Bearbeitung der Werkstücke gehalten wird.

4. Zentraler Spindelstock nach Anspruch 1, dadurch gekennzeichnet, daß die Zuführ- und Auswurfvorrichtung (23, 23a) der Werkstücke jeweils ein Trägerglied (24, 24a) aufweisen, in dem in Lagern (25, 26 bzw. 25a, 26a) gleitend ein durch einen Stellantrieb (28, 28a) betätigtes rohrförmiges Element (27, 27a) angeordnet ist, das an einem Ende mindestens drei gelenkige Finger (29) aufweist, die mit der Innenbohrung des Werkstücks (4) in Eingriff gebracht werden können und die mittels einer durch einen in dem rohrförmigen Element (27, 27a) angeordneten Stellantriebs gesteuerten Stange (33, 33a) betätigt werden.

5. Zentraler Spindelstock nach Anspruch 4, dadurch gekennzeichnet, daß gegenüber dem gleitenden rohrförmigen Element (27) der Zuführvorrichtung (23) eine Ausgangsöffnung einer Zuführrutsche (37) für die Werkstücke und ein einziehbarer Schild, gegen das das an den Haltefingern (29) angeordnete Werkstück (4) anschlagen kann, angeordnet sind.

6. Zentraler Spindelstock nach Anspruch 4, dadurch gekennzeichnet, daß seitlich zu der Auswurfvorrichtung (23a) der Werkstücke (4) ein Anschlagglied (40) für das Werkstück und eine Öffnung einer Auswurfrutsche für die Werkstücke angeordnet sind.

7. Zentraler Spindelstock nach Anspruch 1, dadurch gekennzeichnet, daß jede Steuerstange (44) für die Backen (5, 5a) jedes Spannfutters (3, 3a) eine Kehle (49) mit einer schrägen Fläche (50) aufweist, in der mindestens eine Kugel (51) eingreift, die an einem Ende einer Schieberstange (52) anliegt, an deren anderem Ende eine weitere Kugel anliegt, die an einer geneigten Fläche (55) eines Rings (56) eingreift, der durch die elastischen Organe (59) gespannt wird, wobei diese Organe der Bewegung der Kugel entgegenwirken und der Ring (56) einen Innenkragen (56a) aufweist, der eine Magnetscheibe bildet, die sich gegenüber mindestens einem Magnetfelddetektor (60) bewegt, der an einen sequentiellen Programmspeicher angeschlossen ist.

7

Fig 1

0 056 204

Fig.2a

Fig.2b

Fig.2c

Fig.2d

Fig.2e

2

Fig. 2f

Fig. 2g

Fig. 2h

Fig. 2i

Fig. 2j

Fig. 2k

Fig. 2l

Fig. 2m

Fig. 2n

Fig. 3

Fig. 4

Fig. 5

Fig. 6

Fig 7

0 056 204

Fig. 8

Fig.9